# EUROPEAN PATENT APPLICATION

(11) **EP 1 247 610 A2**
(43) Date of publication of application: **09.10.2002**
(21) Application number: 02394037.2
(22) Date of filing: 04.04.2002
(51) Int. Cl.: B23P 15/24, B23P 15/00, B29C 33/04, B29C 45/73, B29C 33/38

(54) **Diffusion bonded tooling with conformal cooling**

(30) Priority: 05.04.2001 US 827046
(71) Applicant: Lear Corporation, Southfield, MI 48086-5008 (US)
(72) Inventor: Bak, Joseph V., Eastfort, CT 06242 (US); Baldwin, Neil R., Manchester, CT 06040 (US); Beals, James T., West Hartford, CT 06107 (US); Dardas, Zissis A., Worcester, CT 01602 (US); Schmidt, Wayde R., Pomfret Center, CT 06259 (US)
(74) Representative: Casey, Lindsay Joseph

(57) **Abstract**

A tool with conformal cooling channels is made by diffusion bonding several tool sections (12,14,16,18,20,22) together, which enables the cooling channels to be made in virtually any desired configuration. Once the desired configuration of the cooling channels is determined, a block of tool material in an annealed state is cut into layers. Grooves are formed in the surfaces of the layers or holes are formed through the layers such that the grooves and holes will form the cooling channels when the layers are reconstituted into the block. Indexing holes or equivalent structure fixedly locates adjacent layers when they are reconstituted, and the grooves and holes are precisely located relative to the indexing holes, thus ensuring that the grooves and holes in facing surfaces of the layers form the desired channels. The layers are then diffusion bonded by pressing them together at an elevated temperature.

## Description

### BACKGROUND OF THE INVENTION

### Field of the Invention

The present invention relates to tooling for molds and dies, and more particularly, to tooling with conformal cooling.

### Description of Related Art

Molding tools are widely used to manufacture parts from a myriad of different materials. In many instances, the material must be heated or cooled, or both, during the molding process. Depending on the material, the quality of the finished part can depend to a great extent on the uniformity of the heating and cooling during molding. With most plastic parts, whether made by injection molding, thermoplastic molding, thermosetting molding or reactive molding, unless the part in the mold is heated and/or cooled uniformly, and in a closely controlled fashion, the quality of the part will suffer. For example, if one portion of the part cools faster than another, the part may have residual stresses therein that cause it to warp. Moreover, heating and/or cooling at improper rates can degrade the part's strength and appearance.

One manner of controlling the heating and cooling of parts made with such tooling uses cooling channels in the tooling. The most basic form of cooling channels are simply drilled into the tool. However, since only straight channels can be formed by this technique, it is not particularly effective for more complex parts. For those kinds of parts it has been proposed to use channels that conform more closely to the part's outline. U.S. Patent No. 5,849,238 discloses a highly effective manner of configuring conformal cooling channels.

The advantages of conformal cooling have spawned many approaches to tool making with such channels. A sampling of prior art techniques is contained in U.S. Patents No. 5,031,483, No. 5,204,055, No. 5,340,656, No. 5,387,380, No. 5,775,402 and No. 5,855,933.

One approach, shown in U.S. Patents No. 5,031,483 and No. 5,855,933, forms the tool in sections configured such that when they are assembled to form a complete tool it has the desired cooling channels. At least in theory, this approach should be highly effective in terms of being able to provide cooling channels with a particular configuration. However, it has heretofore proved difficult to realize in practice for many applications because no universally suitable manner of attaching the tool sections together has been found.

U.S. Patent No. 5,031,483 discloses the use of adhesives, brazing and mechanical fasteners for securing together tool laminations that have been formed so that when stacked in the proper order they form conformal cooling channels. U.S. Patent No. 5,855,933 shows tool parts bolted together with adjacent tool sections sealed by O-rings to prevent leakage of coolant fluid from the channels thus formed. It notes that O-ring sealing is unsuitable in many applications and suggests using brazing or high temperature soldering as alternatives. Adhesive bonding of the tool sections has also been proposed, but brazing, soldering and adhesives are unsuitable for certain applications because they may not be strong enough or they may introduce foreign matter into the part during molding. Welding could also be used to secure the tool sections together, but it can be time consuming and may produce non-uniform or incomplete bonding of the tool sections.

One requirement for certain tooling is durability. For example, metal tools are commonly used in the automotive parts industry to manufacture plastic parts from thermoplastic and thermosetting resins. Such resins are often filled with glass or other minerals to enhance their properties. Such fillers can abrade the tools and shorten their lives. As a result, the tools, or at least their surfaces in contact with the parts, should be as hard as possible. Common practice is to use hardened tool steels or hard coatings on the tool to avoid the abrasion and wear suffered by softer materials when used to manufacture parts of glass- or mineral-filled plastics. Otherwise, the tooling would require replacement more often and make the parts more costly.

Accordingly, conformally cooled tools of softer materials, such as those discussed in U.S. Patents No. 5,204,055, No. 5,340,656, No. 5,387,380 and No. 5,775,402, will have an economic penalty over tools made of more traditional tool steels and other harder materials.

It has been proposed to construct laminated dies of tool steel in which tool sections are diffusion bonded together. Chicco, B., "Diffusion Bonding of AISI P20 Tool Steel," Materials Forum, Vol. 16 (1992), pages 105-110, discusses such an approach. However, the AISI ("American Iron and Steel Institute") P20 tool steel used for the experiments in Chicco was already hardened and tempered, with a hardness of 32 on the Rockwell-C scale ("HRC"). According to the Metals Handbook (Ninth Ed.), Vol. 3, page 440, American Society for Metals ("ASM") (1980), P20 tool steel has an achievable HRC of 28-37. Even the maximum value of 37, which can be obtained only under ideal conditions, is not sufficiently hard for many applications discussed above. In addition, Chicco fails to recognize other problems encountered when laminated tools with cooling channels are fabricated by diffusion bonding.

### SUMMARY OF THE INVENTION

It is one object of the invention to provide conformally cooled tooling that avoids the drawbacks of known approaches.

It is another object of the invention to provide conformally cooled tooling that exhibits the durability of existing tooling.

It is yet another object of the invention to provide tooling that has conformal cooling channels and is made in sections that are secured together in a manner that avoids the drawbacks of the prior art.

In accordance with one aspect of the present invention, a method of making a tool for molding a part comprises the steps of providing a plurality of tool sections in an unhardened state, each of a number of the tool sections having at least one of a groove in a surface thereof and a hole therethrough, assembling the tool sections with surfaces thereof in facing relationship to form a tool block wherein the grooves and holes form at least one channel in the tool block, and diffusion bonding facing surfaces of the adjacent tool sections by pressing the tool sections together at an elevated temperature.

In a more specific embodiment, a method of making a tool for molding a part comprises the steps of cutting a body of tool material in an annealed state into layers with opposing surfaces, forming in each of a number of the layers at least one of a groove in a surface thereof and a hole therethrough, assembling the layers in facing relationship so that the grooves and holes form at least one channel in the assembled layers, and diffusion bonding facing surfaces of the adjacent layers by pressing the layers together at an elevated temperature, wherein in more specific aspects the method further comprises the steps of either (1) cooling the diffusion bonded layers under conditions that leave the material in an annealed state that permits machining thereof, machining the diffusion bonded layers to form a tool with a predetermined configuration relative to the channel, and heat treating the machined tool to cause it to assume a hardened state, or (2) forming the layers so that they assume the shape of a tool when assembled and cooling the layers under conditions that leave the material in a hardened state.

In accordance with another aspect of the invention, a tool with at least one fluid flow channel therein is made by a method comprising the steps of determining the configuration of the fluid flow channel relative to a molding cavity to be provided in the tool, cutting a body of tool material in an annealed state into layers with opposing surfaces, forming in each of a number of the layers at least one of a groove in a surface thereof and a hole therethrough, providing indexing means for fixedly locating the surfaces relative to each other, the grooves and holes being located precisely relative to the indexing means, assembling the layers in facing relationship so that the grooves and holes form the fluid flow channel in the assembled layers, and diffusion bonding facing surfaces of the adjacent layers by pressing the layers together at an elevated temperature, wherein in more specific aspects the method further comprises the steps of either (1) cooling the diffusion bonded layers under conditions that leave the material in an annealed state that permits machining thereof, machining the diffusion bonded layers to form the molding cavity, and heat treating the machined tool to cause it to assume a hardened state, or (2) forming the layers so that they provide the molding cavity in the tool when the layers are assembled and cooling the diffusion bonded layers under conditions that leave the material in a hardened state.

### BRIEF DESCRIPTION OF THE DRAWINGS

The objects of the invention will be better understood from the detailed description of its preferred embodiments which follows below, when taken in conjunction with the accompanying drawings, in which like numerals refer to like features throughout. The following is a brief identification of the drawing figures used in the accompanying detailed description.

FIGURE 1 is a perspective view of a block of tool steel cut into layers in preparation for fabrication of a tool in accordance with an embodiment of the present invention.

FIGURE 2 is a sectional view taken along lines 2-2 of FIGURE 1.

FIGURE 3 is a schematic depiction of plural tool steel layers in position for diffusion bonding in accordance with the embodiment of the invention depicted in FIGURE 1.

FIGURE 4 is a perspective view of a block of tool steel after diffusion bonding as shown in FIGURE 3 and rough machining preparatory to final fabrication of a finished tool.

FIGURE 5 is a schematic depiction of another aspect of the invention in which plural finished tools in accordance with FIGURES 1-4 are held in a tool baseplate for supplying heating/cooling fluid to plural tools simultaneously, FIGURE 5A being a side view and FIGURE 5B being an end view of the tool baseplate having multiple tools held therein.

FIGURE 6 depicts a working example in which two blocks with grooves therein were diffusion bonded together in accordance with an embodiment of the invention to demonstrate the feasibility thereof, FIGURE 6A being a view of the face of one of the blocks showing a plan view illustrating the shape grooves therein and FIGURE 6B being a front view of the blocks after being diffusion bonded together.

FIGURE 7 tabulates the results of bonding several samples as shown in FIGURE 6 under different processing conditions.

FIGURE 8 depicts an additional working example demonstrating the feasibility of diffusion bonding three layers to form parallel channels in vertical alignment, FIGURE 8A being a top view of the diffusion bonded block and FIGURE 8B being a front view thereof.

FIGURE 9 depicts another working example demonstrating the feasibility of diffusion bonding three layers to form parallel channels in vertical alignment and connected by a vertical channel, FIGURE 9A being a top view of the diffusion bonded block and FIGURE 9B being a front view thereof.

FIGURE 10 depicts another working example demonstrating the feasibility of diffusion bonding three layers to form orthogonal channels in different planes, FIGURE 10A being a top view of the diffusion bonded block and FIGURE 10B being a front view thereof.

FIGURE 11 depicts another working example demonstrating the feasibility of diffusion bonding three layers to form parallel channels displaced horizontally from each other and connected by a transversely extending channel, FIGURE 11A being a top view of the diffusion bonded block and FIGURE 11B being a front view thereof.

FIGURE 12 depicts another working example demonstrating the feasibility of diffusion bonding three layers to form three parallel channels displaced horizontally from each other, FIGURE 12A being a top view of the diffusion bonded block and FIGURE 12B being a front view thereof.

FIGURE 13 depicts a hypothetical working example that illustrates diffusion bonding three layers to form parallel channels of differing cross-sectional shapes in vertical alignment, FIGURE 13A being a top view of the diffusion bonded block and FIGURE 13B being a front view thereof.

FIGURE 14 depicts another hypothetical working example that illustrates diffusion bonding three layers to form two parallel channels displaced horizontally from each other, FIGURE 14A being a top view of the diffusion bonded block and FIGURE 14B being a front view thereof.

FIGURE 15 depicts another hypothetical working example that illustrates diffusion bonding two layers to form a blind channel, FIGURE 15A being a top view of the diffusion bonded block and FIGURE 15B being a front view thereof.

### DETAILED DESCRIPTION OF PREFERRED EMBODIMENTS

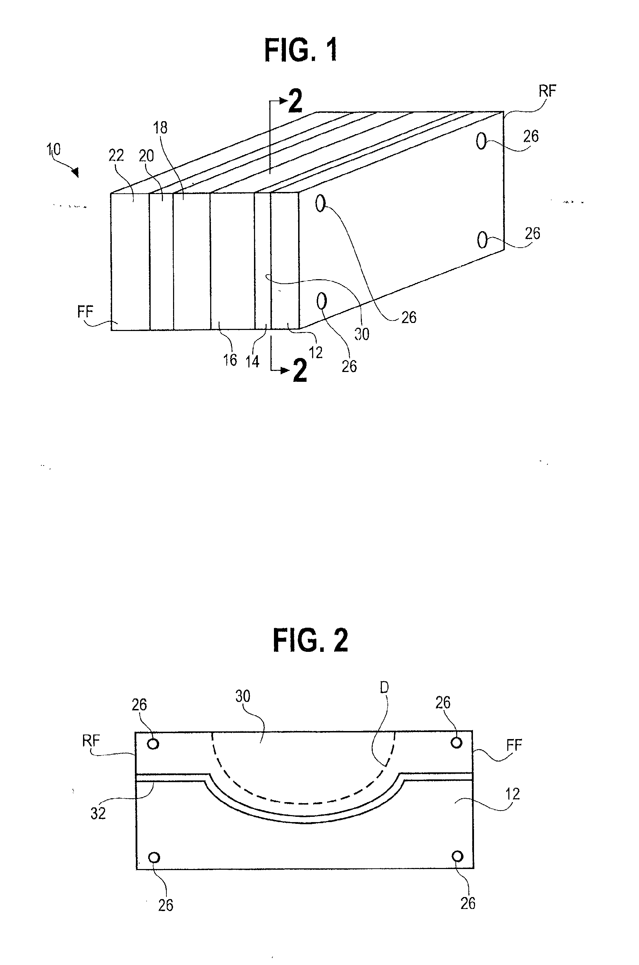

Referring to FIGURE 1, a tool according to this embodiment of the invention is made by cutting a steel block 10 with a front face FF and a rear face RF into a plurality of layered tool sections 12, 14, 16, 18, 20 and 22. The block can be of any suitable material that will permit processing according to the invention in the manner to be described, but it will typically be a known tool steel.

Before the block 10 is cut into the layers, indexing holes 26 are drilled through the block. The location of these holes is precisely determined and they are drilled to very close tolerances. As described in more detail below, the holes 26 comprise indexing means to enable the tool to be made with the required precision.

The desired shape and location of the conformal cooling channels in the tool determines how to cut the block into the layers. (In the present embodiment, the channels are referred to as being for coolant, but it will be understood that they may also be used to introduce heating fluid around the part to be made.) In any case, U.S. Patent 5,849,238, discussed above, discloses an advantageous manner of determining the location (that is, the number) and configuration of the channels using a computer program. That patent is incorporated by reference in this disclosure as if set out in full herein. It will be appreciated that certain constraints may be placed on the configuration of the channels, and the program will determine the optimal configuration based on those constraints.

As this description proceeds, it will become clear that implementation of the present invention is facilitated if each cooling channel lies in a plane, but the invention is not limited to such a configuration. In addition, the computer program may have to be manipulated to provide the optimum cooling for a given number of such cooling channels. In the present embodiment it is assumed that having each channel in a plane parallel to planes containing the other channels will provide suitable cooling. It will be well within the skill of workers in this art to provide channels having other configurations.

Once the proper number of cooling channels has been determined for the particular tool being manufactured, the block 10 is cut into the layered sections 12, 14, 16, 18, 20 and 22. FIGURE 2 is a plan view of a surface 30 of the section 12, having a groove 32 formed therein between the front face FF and the rear face RF. The groove 32 will typically be formed using a router and may or may not be a section of a circle. That is, grooves with non-circular sections may be used in accordance with another aspect of the invention discussed below. The location of the channel 32 in the surface 30 is closely controlled relative to the holes 26 in any suitable manner. Machine tools now in use and available commercially are capable of precisely locating the groove relative to an indexing location, and no further description is necessary to permit one skilled in this art to precisely locate the groove as described herein.

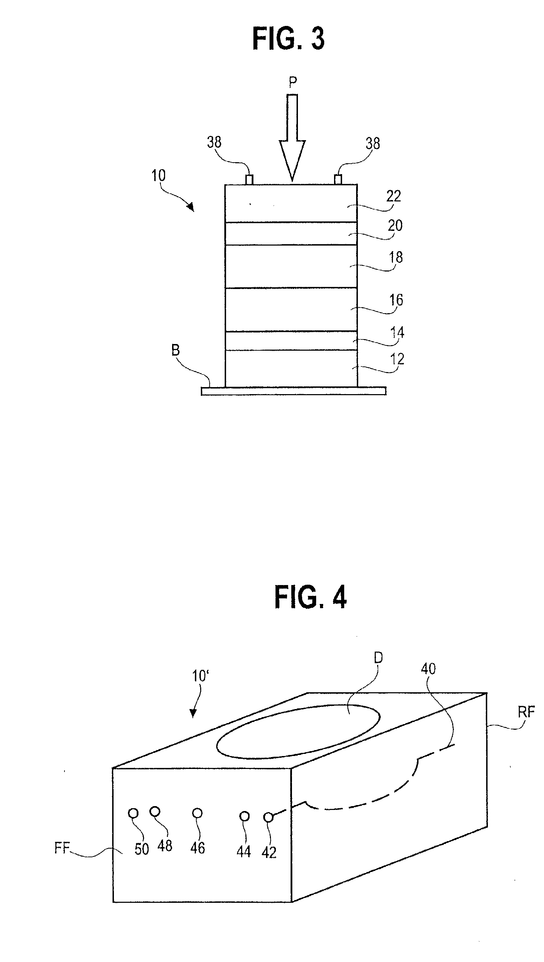

A facing surface of the adjacent layer 14 will have a complimentary groove formed in it, so that when the layers 12 and 14 are reassembled back in the positions shown in FIGURE 1, they will together form a cooling channel 40 (see FIGURE 4). The shape of the groove 30 will presumably conform somewhat to the shape of a depression D (see FIGURE 4) shown in phantom in FIGURE 2, which will eventually be provided in the tool to form a contour of the part (not shown).

The interior layered tool sections 14, 16, 18 and 20 will typically each have grooves (not shown) in both opposing surfaces thereof (although it is within the scope of the invention to form a channel from a groove in only one of the facing surfaces). The layer 20 will have a groove (not shown) in the surface thereof that faces the layer 22, which groove has the same configuration as the groove in the face of the layer 20. The surfaces of the layers 12, 14, 16, 18, 20 and 22 having the grooves therein are ground to a finish suitable for diffusion bonding together in accordance with the various aspects of the invention as discussed in more detail below. The layers are degreased and cleaned in any suitable conventional manner, for example, as discussed in the above-mentioned Chicco, B., "Diffusion Bonding of AISI P20 Tool Steel," Materials Forum, Vol. 16 (1992), at page 106.

FIGURE 3 shows the tool sections stacked on a base B in their original order in the block 10 in preparation for diffusion bonding in accordance with the present invention. Rods 38 fit with a close tolerance in the holes 26 to precisely locate the layers, and hence the grooves in their facing surfaces, relative to each other. It will be appreciated that any suitable indexing structure or technique may be used to precisely locate the grooves and then ensure that they are properly placed for diffusion bonding of the layers. For example, the facing surfaces of the layers could have cooperating protrusions and blind holes that fit together to locate the adjacent layers precisely. The same holes and protrusions would be used to locate the grooves. Laser alignment methods using fiducial marks on the tool sections might also be used.

Following conventional diffusion bonding techniques, the layers are pressed together as denoted by the arrow P, at a high pressure and an elevated temperature in a controlled atmosphere to cause diffusion at the molecular level between adjacent layers. As a result, the block 10 is in effect reconstituted in its solid form, with the conformal cooling channels formed therein. Diffusion bonding can achieve a bonding strength at the interlayer interface that approaches the strength of the parent metal. No filler material, such as a braze, solder, weld or adhesive, is present in the interface to adversely affect the heat transfer characteristics of the tool and thus compromise the effect of the conformal cooling as calculated prior to tool fabrication.

In accordance with an important aspect of the invention, the material used to make the tool is in the annealed state prior to bonding.

If the reconstituted block remains in the annealed state after bonding, it can be machined as if it were solid into the final tool shape. FIGURE 4 shows the reconstituted block 10' after rough machining to form the depression D that provides the outer contour of the part to be made. The cooling channels open onto opposing faces of the block 10' so they are accessible for the flow of heating/cooling fluid therethrough. One such channel 40, formed by the groove 32 in the layer 12 and its compliment in the facing surface of the layer 14, opens at the port 42 in the front face FF of the block 10'. Other channels (not shown) open respectively at the ports 44, 46, 48 and 50. Each channel opens at another port (not shown) in the rear face RF of the block 10'.

Following rough machining, the block 10' is typically heat-treated to its final hardness and the depression D is ground to its final configuration and finish.

In accordance with this aspect of the invention, a material is used that is susceptible to diffusion bonding, yet is capable of being cooled thereafter into a state that can be heat treated to harden the final tool after machining. If the material is steel, for example, it will be chosen to have a composition that permits it to be cooled in a manner that leaves it in an annealed condition suitable for machining, and which thereafter can be heat treated to a final hardness consistent with durability requirements matching its intended use.

In an alternate, and particularly advantageous, application of the invention, the block is cooled after bonding in a manner that heat treats it and causes it to assume the hardened state. In this embodiment of the invention, the block will be machined to a shape approaching that of the final tool prior to bonding. That can be done either before the block is cut into layers or sections, or the tool sections can be machined separately. The latter approach will be easily accomplished with currently available computer controlled machine tools. Final machining, involving minor material removal, can then performed after bonding to bring the tool to its final shape.

Examples of suitable tool steels for that purpose are given in the following Table 1:

**Table 1**

| AISI Designation | Composition (weight %) | HRC* |
|---|---|---|
| S7 chrome-moly shock resistant steel | C 0.5; Si 0.25; V 3.25; Mn 0.7; Mo 1.4 | 45-57 |
| A2 air hardening tool steel | C 1.0; V 0.25; Si 0.60; Mo 1.1; Cr 5.25; Mn 0.6 | 57-62 |
| M2 moly-tungsten high speed steel | C 0.83; Mo 5.0; W 6.35; Cr 4.15; V 1.9 | 60-65 |
| W2 water hardening carbon tool steel | C 0.070 to 1.3 | 50-64 |
| 420 stainless steel | C 0.3-0.4; Mn 1.0 max; P 0.03 max; S 0.03 max; Si 1.0 max; Cr 12.0-14.0 | 48-52 |
| H-13 hot work steel | C 0.4; Si 1.0; V 1.05; Cr 5.25; Mo 1.25; Mn 0.4 | 38-53 |
| D2 high carbon/ high chrome tool steel | C 1.55; Cr 12; Mo 0.08; V 0.09 | 54-61 |
| D3 high carbon/ high chrome tool steel | C 2.2; Cr 12; V 1.0 | 54-61 |

| | | |
|---|---|---|
| * The exact HRC value within each stated range will depend on the actual annealing and hardening conditions. The values shown here are after tempering in the temperature range normally recommended by the ASM Metals Handbook (9th ed.) referred to above. | | |

Other materials, for example, certain beryllium/copper alloys, which are heat treatable and have a Rockwell-C hardness of 38-42, can also be used in the present invention. In addition, titanium and titanium alloys can be used, as can most metals if all oxides are removed from the bonding surfaces and the surface is suitably prepared in accordance with the discussion herein.

It will be appreciated that the layers can be machined to provide grooves that are interconnected at their ends, rather than extending entirely through the block from face to face. In that event, the finished block as shown in FIGURE 4 would have two ports, one serving as an inlet and one serving as an outlet to the single cooling channel in the block. U.S. Patent No. 5,855,933 shows an arrangement whereby circular cooling channels in different parallel planes are interconnected by staggered openings, in both a cavity mold and a core mold that fits within the cavity mold to form an annular molding cavity. Molds with that configuration can also be fabricated to great effect using the present invention.

In fact, the shape of the cooling channels that can be constructed using the technique of the present invention is virtually unlimited. For example, the channels or sections of the channels need not lie in a plane. For example, they could be helical as shown in U.S. Patents No. 5,031,483 and No. 5,849,238. In addition, any of the configurations shown in U.S. Patents No. 5,204,055, No. 5,340,656, No. 5,387,380 and No. 5,775,402 are also possible with the present invention.

The cross sectional area of the cooling channel is one of the parameters that is specified in the course of fabricating a tool in accordance with the present invention. That is, achieving the desired performance with the specified configuration and number of cooling channels depends on the final cross sectional area of the channels after diffusion bonding. Subjecting the layers to the high compressive stresses involved in diffusion bonding can deform the channels so that they no longer have the same cross sectional area they would have if the layers were simply attached to each other. This can be compensated for to some degree by machining the grooves with an appropriate oval shape so that they are "deformed" into circles during diffusion bonding.

However, the ultimate application of the tool may require even greater precision. That is, a given layer will likely have different shape grooves on its opposite faces. In that case, the areas in contact with the respective facing surfaces on adjacent layers will be different. That in turn will result in the two opposite faces of the layer being subjected to different stresses, with the result that the channel(s) on each face will deform different amounts during diffusion bonding. This effect can also be compensated for by suitably altering the shape of the groove(s) in each surface.

Complex mathematical modeling is required to determine the shapes of the grooves in the tool segments that will provide the necessary precisely configured channels in the finished tooling. As mentioned above, a simple approach would involve making the grooves slightly oval, with their long axes in the direction of the applied force during the bonding operation. However, there may be channel and/or tool configurations for which that approach does not provide the necessary precision. In that event, the mathematical technique known as finite element modeling can be used to predict the distortion of the grooves during the bonding operation and compensate for it by altering the configuration of the groove in the tool segments to be bonded together.

There are a number of commercially available software applications that will perform this type of analysis, such as the ANSYS/Structural program provided by ANSYS, Inc., Canonsburg, PA, the ABAQUS suite of programs provided by Hibbitt, Karlsson & Sorenson, Inc., of Pawtucket, RI, and the MARC finite element analysis programs provided by MARC Analysis Research Corporation of Palo Alto, CA. These programs permit examination of the effect on the shape of the cooling channel in the finished tool of parameters such as applied bonding pressure, temperature and time of the tool material, as well as its mechanical properties, such as flow stress. In this manner, a tool with cooling channels of the requisite precision can be fabricated.

Cooling channels that extend from face to face in a block, as shown in FIGURE 4, so that each channel has an inlet and an outlet port is one aspect of the present invention. While that simplifies the amount of machining required to form the channels, it means that provision must be made to introduce cooling/heating fluid to multiple ports in the faces of a single tool.

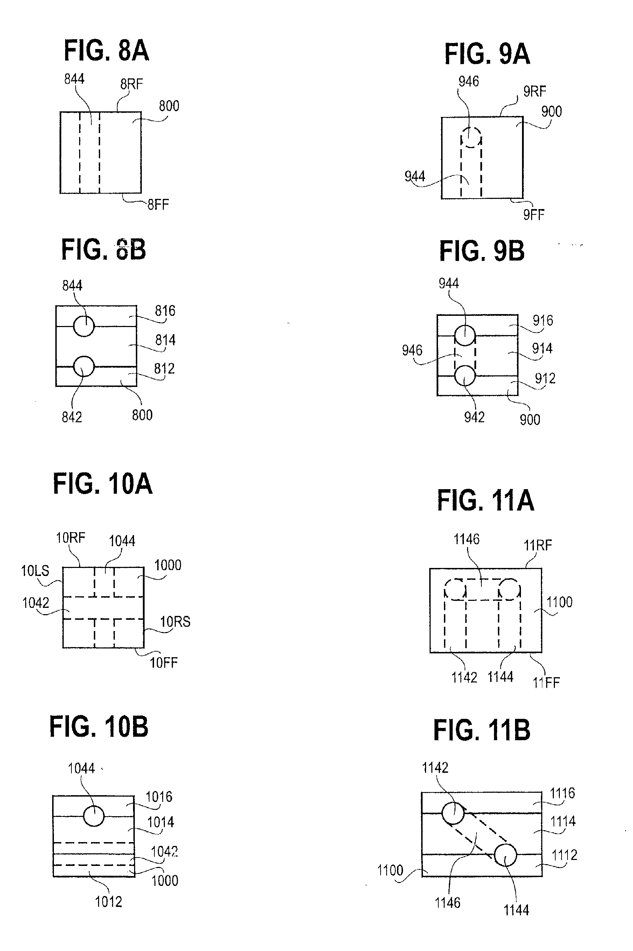

Alternatively, it is another aspect of the invention to have the inlet and outlet ports for a given channel opening onto preselected faces of the tool. Or, more advantageously, a tool will have only one inlet port and one outlet port, such as the tool shown in U.S. Patent 5,849,238 referred to above. Both of the ports can also open onto the same face of the tool. A tool with such an overall configuration, which may require having cooling channels in different planes, can be fabricated using a variety of the basic configurations shown in FIGURES 8-15 discussed below, or variations thereof.

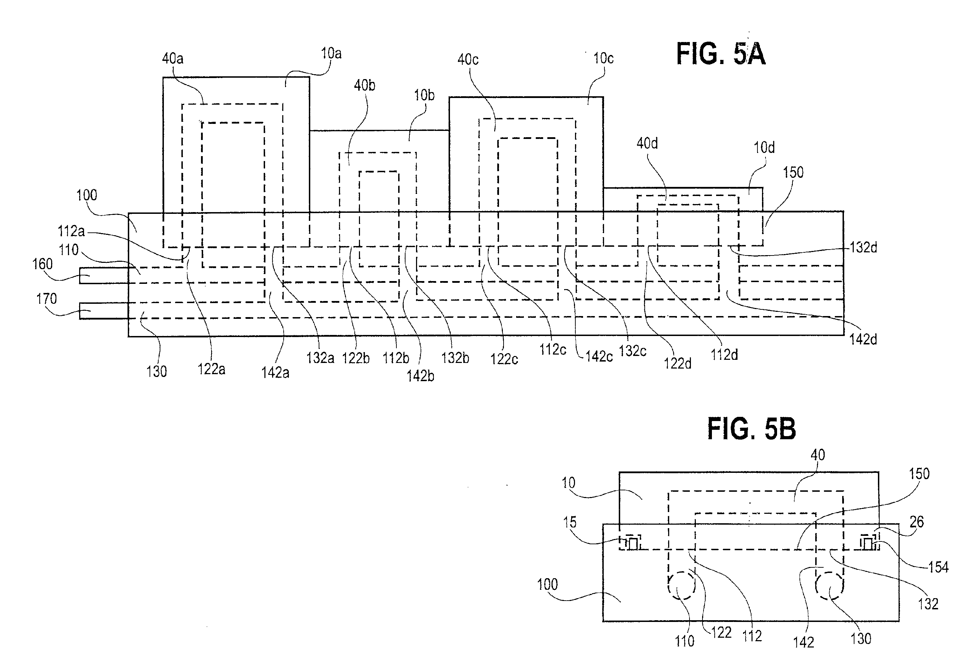

In any case, multiple such tools 10a, 10b, 10c and 10d can be readily accommodated in a single tool baseplate 100 as shown schematically in FIGURES 5A and 5B. The tools have respective inlet ports 112a, 112b, 112c and 112d, and respective outlet ports 132a, 132b, 132c and 132d, both of which open onto the same face of each tool. The inlet ports and outlet ports are connected by a single cooling channel 40a, 40b, 40c and 40d, depicted schematically in FIGURE 5. It will be appreciated that the actual configuration of the cooling channels 40 will be determined in accordance with the above discussion.

The baseplate 100 includes an inlet manifold 110 connected to plural inlet lines 122a, 122b, 122c and 122d and an outlet manifold 130 connected to plural outlet lines 142a, 142b, 142c and 142d. (It will be appreciated that the manifolds 110 and 130 are both shown in FIGURE 5A to aid in a complete understanding of the characteristics of the baseplate 100; of course if the manifolds were disposed side-by-side as shown in FIGURE 5B, they would not be seen separately in FIGURE 5A.) The inlet manifold 110 is in fluid communication with the tool inlet ports 112a, 112b, 112c and 112d of the tools 10a, 10b, 10c and 10d through the inlet lines 122a, 122b, 122c and 122d, respectively. The outlet manifold 130 is in fluid communication with the tool outlet ports 132a, 132b, 132c and 132d of the tools 10a, 10b, 10c and 10d through the outlet lines 142a, 142b, 142c and 142d, respectively.

The tool baseplate 100 of the depicted embodiment accepts the four tool inserts 10a, 10b, 10c and 10d in an insert pocket 150. The insert pocket includes locating protrusions 154, which can be adapted to fit within tool locating holes in the tool inserts. The indexing holes 26 (see FIGURES 1-4) can serve as these locating holes in a particularly advantageous arrangement. It will be appreciated that the tools 10 are fabricated with the locations of the inlet ports 112 and the outlet ports 132 precisely predetermined relative to the locating holes (and the protrusions 154) so that the inlet ports and outlet ports match with the inlet and outlet lines 122 and 142 in the tool baseplate.

In operation, the tool inserts 10a-10d are held in place in the insert pocket by any suitable arrangement. A typical manner of holding the inserts in place in the baseplate 100 would be to use bolts (not shown) that pass through the baseplate from the bottom and thread into blind holes provided in the tool inserts. Tightening the bolts would draw the inserts down against the bottom surface of the insert pocket 150. O-rings (not shown) or other suitable structure can be used to ensure a fluid-tight seal between the baseplate 100 and the tool inserts.

Cooling/heating fluid is introduced by an inlet duct 160 into the inlet manifold 110, from which it flows through the channels 40a-40d in the tool inserts, and thence to the outlet manifold 130. The outlet manifold 130 is connected to an outlet duct 170 that leads the fluid away from the baseplate. The manifolds 110 and 130 are shown as extending completely through the baseplate 100. This makes the manifolds easier to make and permits them to be readily cleaned. If the manifolds are so constructed, the ends will be sealed in any suitable fashion during operation. Those skilled in the art will appreciate that the inlet manifold could end at the inlet line 112d and the outlet manifold could begin at the outlet line 142d.

Tools made in accordance with the present invention are particularly adapted for use with such a tool baseplate. The present invention permits tools with conformal cooling/heating channels to be made in almost any desired configuration. That is, the invention permits tools with optimum cooling/heating channels to be made, without imposing constraints on the configuration of the tool itself. Accordingly, tools can be readily made to fit into a tool baseplate like that shown in FIGURE 5 regardless of the contours of the cooling channels.

### Working Example

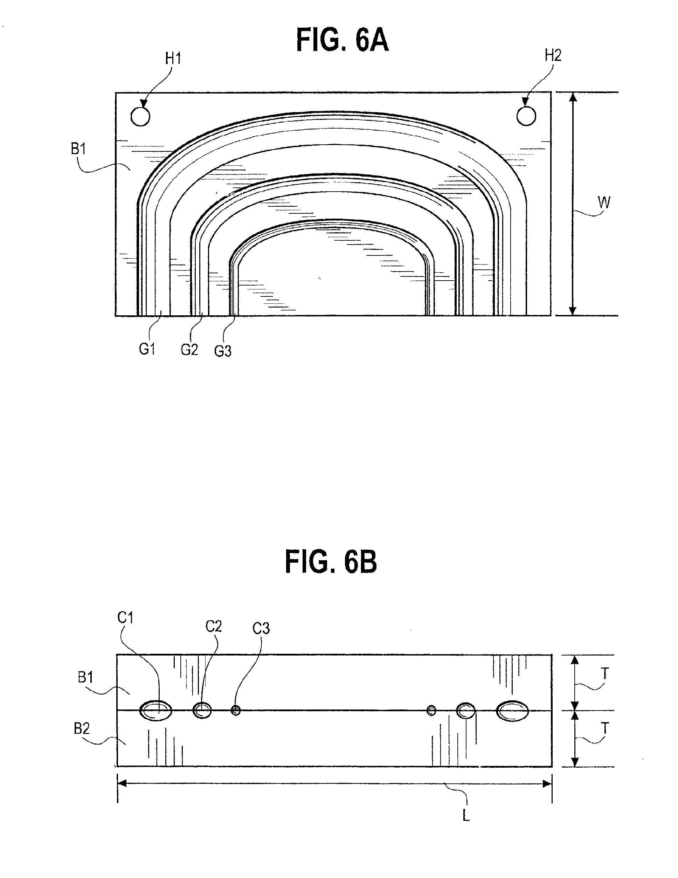

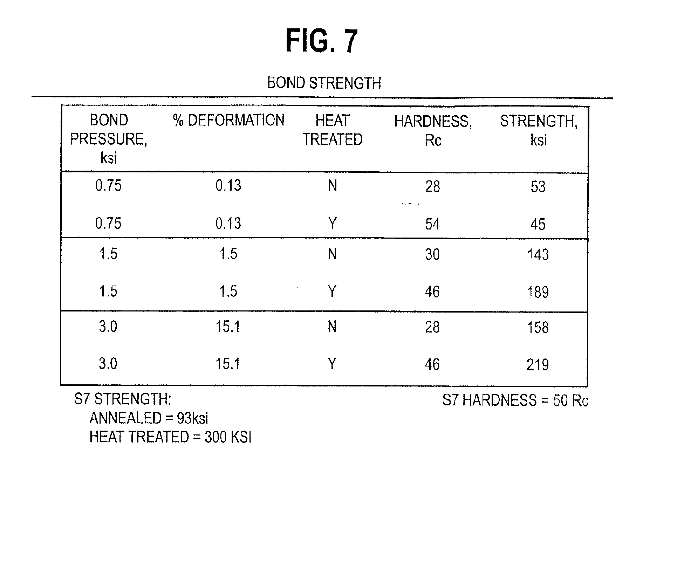

The feasibility of diffusion bonding multiple layers to form a tool was demonstrated by using two blocks B1 and B2, shown in FIGURES 6A and 6B. Each block was 2" wide (W) by 4" long (L) and 0.5" thick (T), and comprised S7 tool steel that had not been heat treated, that is, in the annealed state. Matching grooves G1, G2 and G3, each having a U-shaped planform, were machined into major surfaces of the blocks. To demonstrate the feasibility of the invention with different size grooves, the outer groove G1 was 0.25" wide, the middle groove G2 was 0.125" wide and the inner groove was 0.0625" wide. Each groove was 1/4 as deep as it was wide, so that the completed channels C1, C2 and C3 were ½ as tall as they were wide. The grooves were provided with this configuration because it was felt that it would make the location of the edges of the grooves more prominent in the ultrasonic bond evaluation technique discussed balow. The grooves in each block were precisely located relative to 0.25" diameter indexing holes H1 and H2.

The surfaces of the blocks having the grooves therein were then prepared for diffusion bonding by grinding and polishing each to a 16 microinch surface finish (1 microinch = 10^{*-*}⁶ inch). The surfaces were degreased with acetone and solvent cleaned with methanol. Other commercially available degreasers and cleaners are also suitable. Dowels (not shown) were lightly press-fit into the indexing holes H1 and H2 to secure the blocks together with the grooves in facing surfaces in alignment.

Several such samples were made, and they were bonded at 1100 °C in a vacuum hot press for 20 minutes under a vacuum at a pressure of 0.75 ksi (1000 pounds per square inch). The parts were cooled under the following conditions:
1. From 1100 °C to 800 °C at a rate of 5 °C per minute, and then held at 800 °C for 10 minutes.
2. From 800 °C to 600 °C at a rate of 0.2 °C per minute, and then held at 600 °C for 60 minutes.
3. From 600 °C to 25 °C (room temperature) at a rate of 20 °C per minute.

Cooling under these conditions left the parts in the annealed state.

Some of the samples were then hardened by preheating the bonded blocks to approximately 700 °C, and then elevating their temperature to approximately 940 °C and holding it there for about 30 minutes. That was followed by an oil quench, and tempering at 260 °C for 30 minutes. (It will be understood that whether quenching is in oil or air will depend on the material used.)

Additional samples of the same configuration were made under the same conditions, except that the bonding pressure was 1.5 ksi and 3.0 ksi, respectively.

The bonded samples, both in the annealed state and after hardening, were tested using the nondestructive technique described in Lavrentyev, A.I., et al., "Ultrasonic Measurement of the Diffusion Bond Strength," Ultrasonics, Vol. 38 (2000), pages 513-516.

Qualitatively, the ultrasonic tests revealed that 0.75 ksi provided excellent bonding at the edges of the two larger channels C1 and C2 along their entire length. There was poorer bonding in the area bounded by the smallest channel C3 and the bottom edge of the block (as seen in FIGURE 6A). These flaws were not evident in the samples bonded at higher pressures. The bonding flaws indicated by the ultrasonic testing were later confirmed using more standard metallurgical analysis, in which the samples were ground down to the bond area and examined microscopically.

FIGURE 7 presents quantitative results of the tests in tabular form. By way of explanation, "% Deformation" is the thickness of the sample before bonding minus the thickness after bonding, divided by 100. "Strength, ksi" is the tensile strength of the finished bond. Given below the tabulated values for the samples are comparable values for S7 tool steel. (The hardness shown for S7 is after heat-treatment.)

FIGURE 7 shows that although bonding at 0.75 ksi pressure provided negligible deformation, the bond strength was significantly increased without undue deformation at a bonding pressure of 1.5 ksi. In addition, bonding at 0.75 ksi showed the above-mentioned qualitative defects. Although the bond strength was increased with a bonding pressure of 3.0 ksi, the resulting 15% deformation was deemed unacceptable.

It will be appreciated that the tensile strength of the bond when using 1.5 ksi bonding pressure compares favorably with the tensile strength of S7 tool steel, shown below the table in FIGURE 7.

It is believed that using materials in the annealed state enhances the resulting diffusion bond over that achievable with hardened materials. In addition, it facilitates machining. It is also believed that the increased strength of the bond after heat treating, as shown in FIGURE 7, indicates that the microstructure of the bond is changed during heat treating, perhaps indicating that the microstructure in the annealed state contributes to enhanced final bond strength over that achievable when diffusion bonding hardened materials.

Specifically, the S7 tool steel used for the above samples was received in a spherized anneal state, in which the material consists primarily of spherical carbide particles. After bonding and cooling, the material was in an annealed state in which the microstructure of the material was converted primarily to pearlite with some martensite. The subsequent hardening produced primarily martensite. Additional tempering of the hardened material would slightly reduce its hardness, but at the same time create a more ductile tool (which would be less prone to damage upon dropping)

### Additional Working Examples

FIGURES 8-15 depict a variety of working examples that demonstrate the applicability of the present invention to cooling channels of various basic geometries, which can be combined in various ways in a single tool to optimize the configuration of cooling/heating channels in the tool in accordance with the present invention.

The working examples depicted in FIGURES 8-12 represent actual samples fabricated as finished blocks comprising three 0.5" thick layers of annealed S7 tool steel bonded together and cooled under the conditions discussed above with respect to the working example depicted in FIGURE 6. The bonding pressure was 1.5 ksi. Each block was 2.0" thick from its front face FF to its rear face RF and 2.0" wide across each such face from a left side LS to a right side RS.

Referring specifically to FIGURE 8, FIGURE 8B is a front view of the first block 800 showing the three layers 812, 814 and 816. FIGURE 8A, which is a top view, illustrates that two channels 842 and 844, each of which is generally circular in cross-section, extend through the block 800 from a front face 8FF to a rear face 8RF. The two channels 842 and 844 are parallel and aligned vertically (that is, in the direction in which the bonding force was applied), which can be appreciated from FIGURE 8B.

Referring specifically to FIGURE 9, FIGURE 9B is a front view showing the three layers 912, 914 and 916. FIGURE 9A, which is a top view, illustrates that two channels 942 and 944, each of which is generally circular in cross-section, extend from a front face 9FF of the block and terminate before reaching a rear face 9RF. The channels 942 and 944 are parallel and aligned vertically (that is, in the direction in which the bonding force was applied). A through hole 946 was drilled in the middle layer 914 parallel to the pressure-applying direction, at a location that matched up with the ends of the channels 942 and 944 when the layers were reassembled into the block 900.

Referring specifically to FIGURE 10, FIGURE 10B is a front view showing the three layers 1012, 1014 and 1016. FIGURE 10A, which is a top view, illustrates the orientation of the two channels 1042 and 1044, each of which is generally circular in cross-section. The channel 1042 extends through the block 1000 from a right side 10RS to a left side 10LS. The channel 1044 extends through the block from a front face 10FF to a rear face 10RF. That is, the channels 1042 and 1044 are orthogonal to each other.

Referring specifically to FIGURE 11, FIGURE 11B is a front view showing the three layers 1112, 1114 and 1116. FIGURE 11B, which is a top view, illustrates that two channels 1142 and 1144, each of which is generally circular in cross-section, extend from a front face 11FF of the block and terminate before reaching a rear face 11RF. The two channels 1142 and 1144 are offset vertically (that is, in the direction in which the bonding force was applied), which can be appreciated from FIGURE 11B. A through hole 1146 was drilled in the middle layer 1114 oblique to the pressure-applying direction, at an orientation such that the ends of the hole 1146 matched up with the ends of the channels 1142 and 1144 when the layers were reassembled into the block.

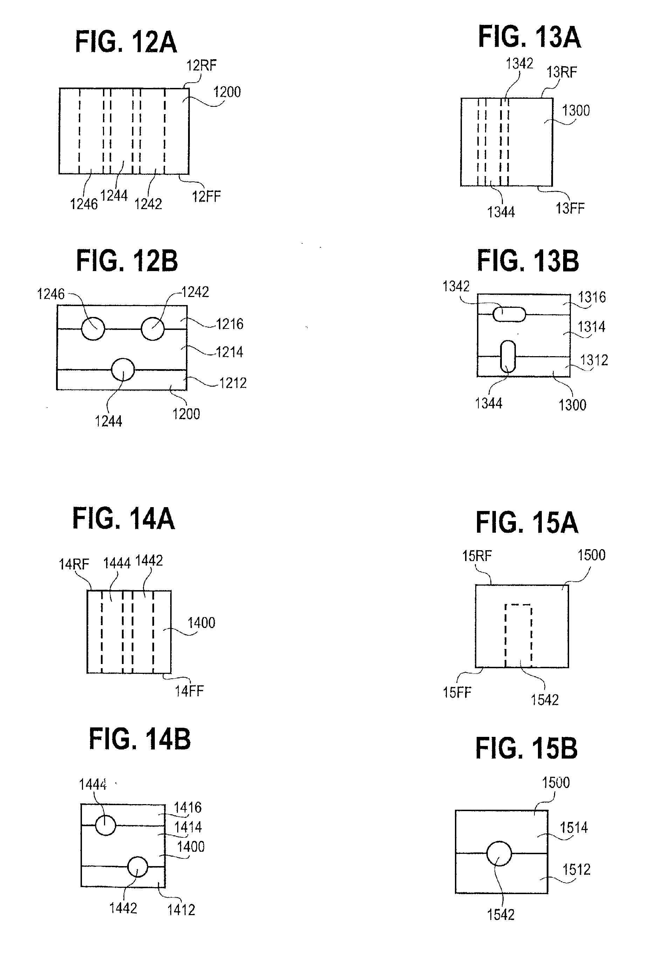

Referring specifically to FIGURE 12, FIGURE 12B is a front view showing the three layers 1212, 1214 and 1216. FIGURE 12B, which is a top view, illustrates that three channels 1242, 1244 and 1246, each of which is generally circular in cross-section, extend through the block 1200 from a front face 12FF to a rear face 12RF. All three channels are parallel and offset vertically (that is, in the direction in which the bonding force was applied), which can be appreciated from FIGURE 12B.

All of these working examples involved multiple samples and many of those were tested by the ultrasonic techniques discussed above and described in Lavrentyev, A.I., et al., "Ultrasonic Measurement of the Diffusion Bond Strength," Ultrasonics, Vol. 38 (2000), pages 513-516. Tested samples exhibited good bonding throughout mating surfaces of adjacent layers and demonstrated the feasibility of applying the principles of the present invention to the geometries depicted in FIGURES 8-12.

FIGURES 13-15 depict hypothetical working examples showing other basic geometries that can be predicted to bond well from the results achieved with the actual working examples shown in FIGURES 8-12.

Referring specifically to FIGURE 13, FIGURE 13B is a front view showing the three layers 1312, 1314 and 1316. FIGURE 13A, which is a top view, illustrates the two channels 1342 and 1344 in more detail. The channel 1342 is an elongated oval in cross-section, with its flat sides normal to the direction in which the bonding force was applied. The channel 1344 is also an elongated oval in cross-section, but with its flat sides along the direction in which the bonding force was applied. The channels 1342 and 1344 extend from a front face 13FF of the block and terminate before reaching a rear face 13RF, and are parallel and aligned vertically (that is, in the direction in which the bonding force was applied), which can be appreciated from FIGURE 13B.

Referring specifically to FIGURE 14, FIGURE 14B is a front view showing the three layers 1412, 1414 and 1416. FIGURE 14A, which is a top view, illustrates that two channels 1442 and 1444, each of which is generally circular in cross-section, extend through the block 1400 from a front face 14FF to a rear face 14RF. The two channels 1442 and 1444 are parallel and offset vertically (that is, in the direction in which the bonding force was applied), which can be appreciated from FIGURE 14B.

FIGURE 15 depicts a hypothetical working example of a block 1500 of two layers 1512 and 1514 that are bonded together as shown in the front view of FIGURE 15B. FIGURE 15A, which is a top view, illustrates that a channel 1542, which is generally circular in cross-section, extends from a front face 15FF of the block and terminates before reaching a rear face 15RF.

Other actual working examples, not depicted, involved two tools approximately 5" from front to rear, 2" wide from side to side and about 4" thick in the direction in which the layers were stacked.

The first tool was similar in configuration to the schematic depiction in FIGURES 1-4, except that it comprised five layers and four cooling channels. The second tool comprised seven layers and two cooling channels in different planes, connected by through holes in selected layers (see FIGURE 9). The material for both tools was annealed S7 tool steel. The bonding and cooling conditions were as described in connection with the working examples depicted in FIGURES 8-12.

These sample tools were tested by the ultrasonic techniques discussed above and described in Lavrentyev, A.I., et al., "Ultrasonic Measurement of the Diffusion Bond Strength," Ultrasonics, Vol. 38 (2000), pages 513-516. Both exhibited good bonding throughout the mating surfaces of adjacent layers. The tools were also leak tested using flowing water and the bonds showed no signs of leakage.

In another embodiment, the present invention employs diffusion bonding to make tooling with conformal cooling channels in a manner that individual tool sections can be readily replaced.

In this embodiment of the invention, the finish of the facing surfaces of the tool sections is controlled to provide a non-optimum bond. That is, when the optimum bond is sought, the surface finish is made as smooth as possible consistent with the necessity of controlling production costs. The above-mentioned article by Chicco, B., "Diffusion Bonding of AISI P20 Tool Steel," Materials Forum, Vol. 16 (1992), discusses at page 106 grinding the surfaces to be bonded to a surface roughness Ra of approximately 0.2µm, or 8 microinches. For the present invention, the preferred surface finish range is 63 microinches to 2 microinches, the finer surface finishes being achieved by polishing (16 microinches to 4 microinches) or lapping (16 microinches to 2 microinches).

In this embodiment of the invention, the surface finish is greater than about 10 microinches, and bonding is performed under controlled conditions that provide an imperfect bond between the facing surfaces of the tool sections. This can be accomplished by reducing the bonding pressure or temperature, or introducing impurities into the atmosphere in which bonding takes place. The goal is to provide a bond with sufficient strength to permit subsequent processing of the tool, such as machining to provide the final tool configuration, but not so strong as to prevent nondestructive separation of the tool sections at a later time. The exact conditions under which this occurs will depend on the tool material, and those skilled in the art will be able to determine those conditions without undue experimentation.

A tool made in accordance with this aspect of the invention permits worn parts of the tool to be replaced without replacing the entire tool.

It will be appreciated that the present invention is not limited to tooling for injection molding. It can be used with a variety of processes in addition to injection molding, such as thermoforming, blow molding, die casting, resin transfer molding, reaction injection molding, sheet metal forming, forging and any other forming technique that requires tooling with controlled heating and cooling.

It will also be understood that modifications other than those particularly pointed out above may be made without departing from the invention. For example, although all of the depictions herein show only one groove in a face of a particular layer, more than one such groove may be incorporated in any or all of the layers.

While preferred embodiments of the invention have been depicted and described, it will be understood that various modifications and changes can be made other than those specifically pointed out without departing from the spirit and scope of the invention, which is defined solely by the claims that follow.

## Claims

1. A method of making a tool for molding a part, the method comprising the steps of:
providing a plurality of tool sections in an unhardened state, each of a number of said tool sections having at least one of a groove in a surface thereof and a hole therethrough ;
assembling said tool sections with surfaces thereof in facing relationship to form a tool block wherein said grooves and holes form at least one channel in said tool block; and
diffusion bonding said facing surfaces of said adjacent tool sections by pressing said tool sections together at an elevated temperature.

2. A method as in claim 1, wherein said facing surfaces of said tool sections have complementary grooves therein and said tool sections are assembled with said complementary grooves in facing relationship to form said channel.

3. A method as in claim 2, wherein each said groove has a predetermined cross-sectional configuration that provides said channel with a predetermined cross-sectional configuration after said diffusion bonding step.

4. A method as in claim 2, wherein said tool includes at least three said tool sections, at least one of which has grooves in two opposing surfaces thereof.

5. A method as in claim 4, wherein said facing surfaces of said tool sections are planar and opposing surfaces of each said tool section are substantially parallel.

6. A method as in claim 2, wherein said tool includes at least one said groove in one said tool section in fluid communication with at least one said hole through an adjacent said tool section.

7. A method as in claim 1, further comprising the step of grinding and polishing said facing surfaces of said adjacent tool sections to a predetermined surface finish prior to said diffusion bonding step.

8. A method as in claim 7, wherein said predetermined surface finish is controlled to provide a bond between said tool sections that includes imperfections.

9. A method as in claim 8, wherein at least one of the composition of the ambient atmosphere, said pressure and temperature are controlled to provide a bond between said tool sections that includes imperfections for permitting nondestructive separation of said bonded tool sections.

10. A method as in claim 1, further comprising the step of cooling said diffusion bonded tool sections under conditions that leave said material in an annealed state that permits machining thereof.

11. A method as in claim 1, further comprising the steps of:
forming said tool sections so that they assume the shape of a tool when assembled; and
cooling or heating said diffusion bonded tool sections under conditions that leave said material in a hardened state.

12. A method of making a tool for molding a part, the method comprising the steps of:
cutting a body of tool material in an annealed state into layers with opposing surfaces;
forming in each of a number of said layers at least one of a groove in a surface thereof and a hole therethrough;
assembling said layers in facing relationship so that said grooves and holes form at least one channel in said assembled layers; and
diffusion bonding facing surfaces of said adjacent layers by pressing said layers together at an elevated temperature.

13. A method as in claim 12, further comprising the steps of:
cooling said diffusion bonded layers under conditions that leave said material in an annealed state that permits machining thereof;
machining said diffusion bonded layers to form a tool with a predetermined configuration relative to said channel; and
heat treating said machined tool to cause it to assume a hardened state.

14. A method as in claim 12, further comprising the steps of:
forming said layers so that they assume the shape of a tool when assembled; and
cooling said layers under conditions that leave said material in a hardened state.

15. A method as in one of claims 13 and 14, wherein said material is selected from the group comprising:
| AISI Designation | Composition (weight %) | HRC |
|---|---|---|
| S7 chrome-moly shock resistant steel | C 0.5; Si 0.25; V 3.25; Mn 0.7; Mo 1.4 | 45-57 |
| A2 air hardening tool steel | C 1.0; V 0.25; Si 0.60; Mo 1.1; Cr 5.25; Mn 0.6 | 57-62 |
| M2 moly-tungsten high speed steel | C 0.83; Mo 5.0; W 6.35; Cr 4.15; V 1.9 | 60-65 |
| W2 water hardening carbon tool steel | C 0.070 to 1.3 | 50-64 |
| 420 stainless steel | C 0.3-0.4; Mn 1.0 max; P 0.03 max; S 0.03 max; Si 1.0 max; Cr 12.0-14.0 | 48-52 |
| H-13 hot work steel | C 0.4; Si 1.0; V 1.05; Cr 5.25; Mo 1.25; Mn 0.4 | 38-53 |
| D2 high carbon/ high chrome tool steel | C 1.55; Cr 12; Mo 0.08; V 0.09 | 54-61 |
| D3 high carbon/ high chrome tool steel | C 2.2; Cr 12; V 1.0 | 54-61 |
and a beryllium/copper alloy that is heat treatable and has an HRC value of 38-42, and titanium and titanium alloys, and metals from which oxides are removed from said facing surfaces and said surfaces are degreased and cleaned, and wherein HRC is the Rockwell-C hardness of the material in a hardened state.

16. A method as in claim 12, wherein said facing surfaces include indexing means for fixedly locating said surfaces relative to each other and said grooves are located precisely relative to said indexing means.

17. A method as in claim 16, wherein:
said indexing means comprises indexing holes formed in said block before cutting it into said layers;
said layers are cut so that each layer includes at least two indexing holes in said opposing surfaces; and
said layers are assembled by aligning said indexing holes and placing an indexing member therein.

18. A tool with at least one fluid flow channel therein made by a method comprising the following steps:
determining the configuration of said fluid flow channel relative to a molding cavity to be provided in said tool;
cutting a body of tool material in an annealed state into layers with opposing surfaces;
forming in each of a number of said layers at least one of a groove in a surface thereof and a hole therethrough;
providing indexing means for fixedly locating said surfaces relative to each other, said grooves and said holes being located precisely relative to said indexing means;
assembling said layers in facing relationship so that said grooves and holes form said fluid flow channel in said assembled layers; and
diffusion bonding facing surfaces of said adjacent layers by pressing said layers together at an elevated temperature.

19. A tool as in claim 18, wherein the method further comprises the steps of:
cooling said diffusion bonded layers under conditions that leave said material in an annealed state that permits machining thereof;
machining said diffusion bonded layers to form said molding cavity; and
heat treating said machined tool to cause it to assume a hardened state.

20. A tool as in claim 18, wherein the method further comprises the steps of:
forming said layers so that they provide said molding cavity in said tool when said layers are assembled; and
cooling said diffusion bonded layers under conditions that leave said material in a hardened state.

21. An assembly including a plurality of tools as in one of claims 19 and 20, wherein each said fluid flow channel of each said tool has first and second ends, said assembly further comprising a tool baseplate including:
an inlet manifold in communication with a plurality of fluid inlet lines;
a outlet manifold in communication with a plurality of fluid outlet lines; and
a tooling insert pocket in communication with said fluid inlet lines and said fluid outlet lines, wherein said plurality of tools are held in said tooling insert pocket with said first end of said channel of each said tool being in communication with one of said fluid inlet lines and said second end of said channel of each said tool being in communication with one of said fluid outlet lines.

22. An assembly as in claim 21, wherein each said tool has a single fluid flow channel having an inlet port and an outlet port opening in one face of said tool.

23. A tool as in claim 18, wherein said tool includes at least three said layers and said fluid flow channel includes a first flow portion formed by a first and a second said layer and a second flow portion formed by a third said layer and said second layer, said first and second flow portions being parallel and aligned in a direction in which said layers are pressed together in said diffusion bonding step.

24. A tool as in claim 23, wherein said first and second flow portions are connected by a hole through said second layer.

25. A tool as in claim 18, wherein said tool includes at least three said layers and said fluid flow channel includes a first flow portion formed by a first and a second said layer and a second flow portion formed by a third said layer and said second layer, said first and second flow portions being parallel and offset transverse to a direction in which said layers are pressed together in said diffusion bonding step.

26. A tool as in claim 25, wherein said first and second flow portions are connected by a hole through said second layer.

27. A tool as in claim 18, wherein said tool includes at least three said layers and said fluid flow channel includes a first flow portion formed by a first and a second said layer and a second flow portion formed by a third said layer and said second layer, said first and second flow portions being orthogonal to each other.

28. A tool as in claim 18, wherein said tool includes at least three said layers and said fluid flow channel includes a first flow portion formed by a first and a second said layer and a second flow portion formed by a third said layer and said second layer, said first and second flow portions having non-circular cross-sections.

29. A tool as in claim 18, wherein said tool includes at least three said layers and said fluid flow channel includes first and second flow portions formed by a first and a second said layer and a third flow portion formed by a third said layer and said second layer, said first, second and third flow portions being parallel and offset transverse to a direction in which said layers are pressed together in said diffusion bonding step.

30. A tool as in claim 18, wherein said tool includes at least first and second layers and said fluid flow channel includes a flow portion formed by said first and a second layers, said flow portion having one end terminating in the interior of said tool.
